# EUROPEAN PATENT APPLICATION

(11) **EP 1 365 062 A1**
(43) Date of publication of application: **26.11.2003**
(21) Application number: 02100553.3
(22) Date of filing: 23.05.2002
(51) Int. Cl.: D07B 1/06, B65H 69/08, B23K 11/00

(54) **METAL CORD**

(71) Applicant: N.V. BEKAERT S.A., 8550 Zwevegem (BE)
(72) Inventor: VANDERBEKEN, Bert, 8790, WAREGEM (BE); VANCOMPERNOLLE, Stijn, 9000, GENT (BE)

(57) **Abstract**

A metal cord (100) comprising at least two metal strands (101a-101g), at least one of the metal strands being welded, whereas the other of the metal strands are not welded near this strand weld.

## Description

### Field of the invention.

The present invention relates to metal cords and more in particular to the improvement of the tensile strength of the metal cord at welds present over the length of the metal cord.

### Background of the invention.

At present, using welds to connect two ends of metal cords is avoided as much as possible. These since e.g. metal cord welds create an inflexible zone in the metal cord, disturbing e.g. the bending of the metal cord. Further, the weld in the metal cord creates a weak zone as far as mechanical properties such as tensile strength are concerned. The force at rupture of a welding zone of a cord is usually less than 60% of the force at rupture of the metal cord without the welding zone.

Another important aspect is noticed when several metal cords are used e.g. to reinforce a timing belt or for use in elevator belts. When one metal cord breaks during load, this seems to create a "shock-effect", which usually causes break of all adjacent metal cords, or even the whole belt. The same applies when several windings of a metal cord are used to reinforce e.g. endless belts.
This is another reason why no welds are allowed in these applications.

An other disadvantage of the inflexible zone of the weld, using metal cords in polymer or rubber matrices, is that at the welding zone, due to the inflexibility of the weld, the weld tends to migrate in the polymer or rubber in a transversal direction when the metal cord is bend. This may cause shearing of the matrix.

Avoiding the welds of cords is obtained by demanding predetermined lengths for the metal cords to be supplied. This specified length causes a significant price increase of the metal cords. The metal cord manufacturer faces a waste increase, since insufficient lengths of metal cords or intermediate products cannot be sold or used.

### Summary of the invention.

The present invention provides a metal cord, which overcomes or reduces the problems of price increase and decrease of mechanical properties of the metal cord and possibly the object in which the cord is used.

A metal cord as subject of the invention comprises at least two metal strands. At the location in the metal cord, where one metal strand is welded, the other strands of the metal cord are not interrupted and do not comprise a weld near the weld of the one metal strand being welded.

A metal cord as subject of the invention has to comprise at least to strands, most preferably however, such metal cords comprises more than 2 strands, such as 3, 4, 5, 6, 7, 8, 9 or even more strands. All strands may be identical, or may be provided using different strand constructions, a different number of filaments or different filament diameters.

Preferably the other strands do not have a weld over a length of the metal cord (hereafter called "welding part") which comprises the weld of the one metal strand of the metal cord. This welding part has a welding part length L being 2.5 times the lay length of the metal cord. More preferably the welding part length is 5 or even 10 times the lay length of the metal cord.

Most preferably, a weld is provided to the metal strand, which is relatively elastic as compared to the metal strand in which it is located. A metal strand comprising a weld is provided which has an elongation at rupture, which is at least 30%, but preferably larger 35% or even more than 40% of the elongation at rupture of the metal strand in which no weld is present.

Most preferably, the welded strand has a force at rupture being more than 30%, but preferably larger 35% or even more than 40% of the force at rupture of the not-welded strand.

The weld at the metal strand preferably has a diameter, being less than 1.2 times the strand diameter or even more preferred, less than 1.1 times the strand diameter. The weld at the metal strand preferably has a diameter, being more than 0.8 times the strand diameter or even more preferred, more than 0.9 times the strand diameter. Most preferably, the weld diameter is essentially identical to the strand diameter itself.

Such weld having a relatively high elasticity may be obtained by using carefully chosen settings during the welding and preparation steps.

A method to provide a weld, which has improved elasticity, may be obtained by:
- Providing an essentially flat cross-section on both ends of the metal cord which are to be welded to each other;
- At both ends of the metal strand, to be welded to each other, decreasing the lay length Lₛ of the strand; Lₛ may be decreased locally to less than 75% of the original lay length of the strand, or even less than 65% or less than 50% of the original lay length of the strand.
- During welding, the welding parameters are to be set according to the strand properties; such welding parameters are welding time, welding current, welding pressure and the distance between the electrodes fixed on the metal strand; the two ends to be welded are clamped by two electrodes, at a predetermined distance of the end of the strand to be welded. This distance is preferably al small as possible, e.g. less than 2mm, meanwhile leaving enough strand material to be welded. Both ends are pressed to each other with a preset pressure and during a preset time, a specific electrical current flows through the strand from one electrode to the other.
- After welding, the annealing parameters are to be chosen according to the strand parameters. Such annealing is preferably done using electrical current. Two annealing electrodes are fixed to the strand each on an essentially identical preset distance of the weld, and during a preset time, a preset electrical current is to flow through the strand from the one annealing electrode to the other.

The so-called welding part length may be identical to, and as a consequence being defined as the length of both metal strand ends, which have a decreased lay length, obtained by the preparation steps. The weld is located essentially in the middle of the welding part length. The welding part length of the cord is then equal to the length of the metal cord, which comprises both ends with decreased lay length.

The distance between the welding electrodes and the distance between the annealing electrodes is preferably smaller than the sum of the lengths with decreased lay length.

Such welds have the advantage that they further can be used in the process of cord construction operations, either double or single twisting operations.

A metal cord as subject of the invention may have any cord construction comprising at least two strands, each comprising at least two metal filaments. However, some constructions have a larger benefit of the invention.
Preferably, 'nxm-'constructions are used, e.g. 3x3, 7x3, 4x7, 7x4, 7x7 or 7x19. n is to be understood as the number of strands in the cord, each strand having m filaments. It is understood that each strand may comprise different filaments, which are of e.g. a different diameter, a different alloy or have a different coating.

Also 'm₁+(nxm₂)-'constructions may preferably be used. Around a core strand of m₁ filaments, n strands of m₂ filaments are provided. An example is a 3+5x7-cord, being a cord comprising a core stand of 3 filaments, around which 5 strands of 7 filaments each are provided. The filaments m₁ and m₂ may be of the same or a different diameter.
It is understood that each strand may comprise different filaments, which are of e.g. a different diameter, a different alloy or have a different coating.

A metal cord as subject of the invention has a cord diameter preferably less than 14mm, e.g. less than 12 mm or less than 9mm or even less than 7mm, such as less than 5mm, or less than 4mm or even less than 2.5mm, such as less than 2mm or less than 1,7mm. The cord diameter is the diameter of the smallest imaginary circle, which encompasses the radial cross-section of the cord.

The strands used to provide a metal cord as subject of the invention have a strand diameter preferably less than 5mm, e.g. less than 4 mm or less than 2.5mm or even less than 1.75mm, such as less than 1.4mm, or less than 0.9mm or even less than 0.7mm, such as less than 0.6mm, The strand diameter is the diameter of the smallest imaginary circle, which encompasses the radial cross-section of the strand.

The diameters of the metal filaments is preferably less than 1.15mm, e.g. less than 1.05mm or less than 0.85mm or even less than 0.7mm, such as less than 0.5mm, or less than 0.3mm or even less than 0.25mm, such as less than 0.21mm. Usually however, the diameter of the metal filaments is not smaller than 0.04mm.

Metal cord as subject of the invention, preferably are provided out of steel alloys, most preferably out of carbon steels, having more than 0.275%C or more than 0.4%C or even more than 0.6% C, or stainless steel alloys.

A metal cord as subject of the invention has the advantage that the weld on strand level, does not provide an inflexible zone to the metal cord, which, in case such zone would be present, disturbs the use (e.g. bending) of the cord or the product in which the cord is used.

Further, since only one strand is welded, the cord is not weakened too much. The tensile strength of the cord, at the location of the welded strand, approaches minimally the sum of the tensile strengths of the non-welded metal strands in the metal cord. The force at rupture of a sample of the metal cord comprising a weld is usually more than 50%, e.g. more than 60% of the force at rupture of a sample of the metal cord without strand weld. The elongation at rupture of a sample of the metal cord comprising a weld is usually more than 50% e.g. more than 60% or even more than 70% such as more than 80%, e.g. more than 90% of the elongation at rupture of a sample of the metal cord without strand weld. Since usually high security factors for cord loads are used, the presence of a weld on strand level does not cause any additional risk. The elongation at rupture of a sample of the metal cord comprising a weld is larger compared to the elongation at rupture of a sample of the metal cord being welded over the whole cross-section of the cord. Since the welded cords having a weld as subject of the invention, overcomes the presently known technical drawbacks, the cord manufacturer is also able to reduce the waste-level, and the cords can be provided in a more economical way.

Therefor metal cord as subject of the invention may e.g. be used to reinforce polymer or rubber belts, such as timing belts, elevator or hoisting belts, conveyor belts, or can be used for control cables or several automotive applications such as tires or window elevator cable. Due to the improved force at rupture of the metal cord as subject of the invention, the risk on shock-effects of cords breaking and causing adjacent cords in the belt to break, can be decreased in a larger load range, as compared to cords being welded over the whole cross-section.

### Brief description of the drawings.

The invention will now be described into more detail with reference to the accompanying drawings wherein
- FIGURE 1 shows schematically a metal cord as subject of the invention;
- FIGURE 2 shows schematically a radial cross-section according to the plane AA' of the metal cord of FIGURE 1.
- FIGURE 3 and 4 are load-elongation curves of the cord and used strands of FIGURE 1.
- FIGURE 5 shows a chart of a method to provide a metal cord as subject of the invention;
- FIGURE 6 shows a polymer tape, comprising more than one metal cords as subject of the invention.

### Description of the preferred embodiments of the invention.

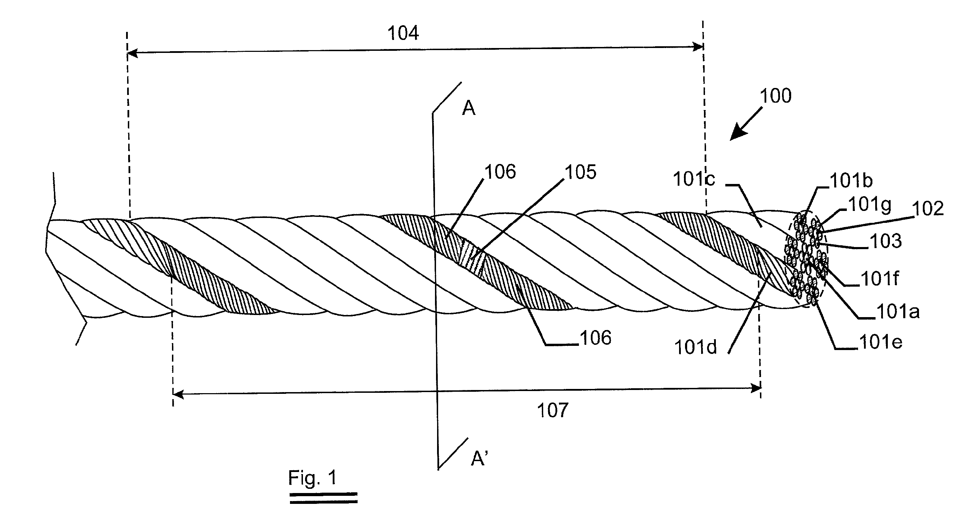

An embodiment of a metal cord as subject of the invention is shown in FIGURE 1. A metal cord 100, provided out of steel having 0.7%C, having a construction "(0.21+6x0.19)+6x(0.19+6x0.175)". The cord comprises 7 strands (101a, 101b, 101c, 101d, 101e, 101f and 101g). The core strand 101a comprising a core filament 102 of diameter 0.21mm, being encircled by 6 filaments 103 of a diameter 0.19mm. The other outer strands 101 b, 101 c, 101 d, 101 e, 101f and 101g having all a core filament 102 of diameter 0.19mm, and 6 encircling filaments 103 of 0.175mm.

The lay length 104 of the metal cord 101 is 12.5mm. The core strand 101a has a lay length of 6.3mm and the outer strands 101b, 101c, 101d, 101 e, 101 f and 101 g having all a lay length of 8mm. the core strand 101 a and the metal cord itself are twisted in the same direction (S or Z direction) whereas the strands 101b, 101c, 101d, 101e, 101f and 101g all being twined in the opposite direction (Z, respectively S).

As shown in FIGURE 2, being a radial section of the metal cord of FIGURE 1 according to the plane AA', strand 101d has a weld 105, whereas the other strands (101a, 101 b, 101 c, 101 e, 101 f and 101 g) are not welded in this section. As shown in FIGURE 1, adjacent to both sides of the weld 105, strand 101d has a zone or length 106, where the strand has a significantly higher torsion.

Where outer strands normally have lay length of 8mm, in zones 106, strand 101d has a lay length of 5mm.

Strand 101d is incorporated in the metal cord using cabling operations. As a result, the two zones 106 with decreased lay length of strand 101d, define a welding part length 107 of the cord, which is for the present embodiment equal to the lay length of the metal cord. In this zone determined by length 107, the strands 101 a, 101b, 101c, 101e, 101f and 101g have no weld. The diameter of the weld is essentially equal to the strand diameter, being 0.54mm.

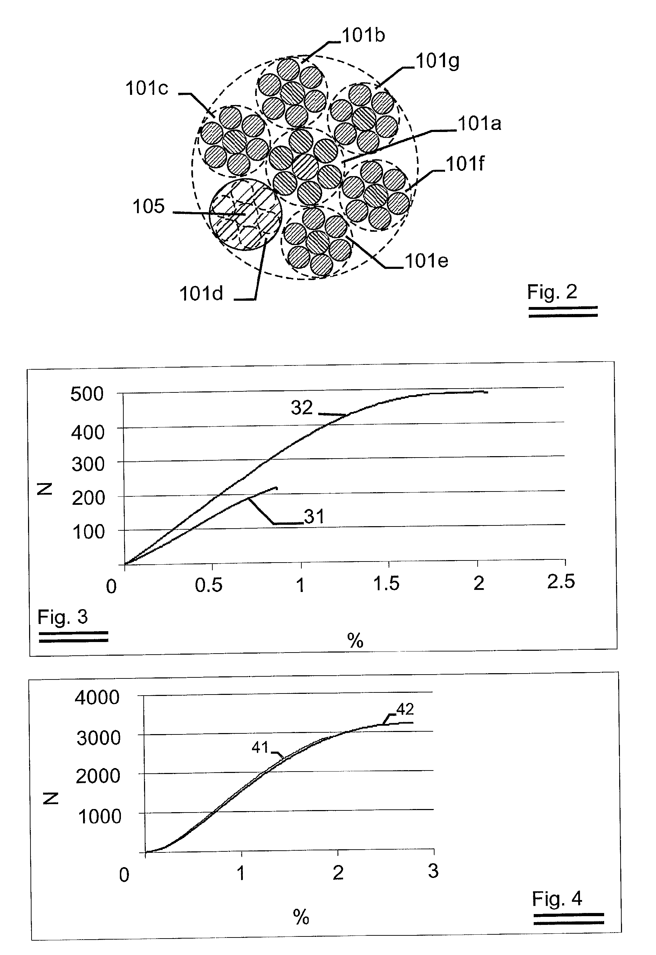

FIGURE 3 and 4 show load-elongation curves of strands and cords, having in abscissa the elongation, expressed in %, and in ordinate the force applied (expressed in Newton)

FIGURE 3 shows a load-elongation curve 31 of a strand 101d of FIGURE 1, having a weld, compared to a load-elongation curve 32 of a reference strand, not being welded. It is noted that the elongation at rupture of a welded strand of curve 31 is 41.8% of the elongation at rupture of the reference strand.

FIGURE 4 clearly shows that a metal cord as in FIGURE 1 or FIGURE 2, comprising one strand with a weld, of which the load-elongation curve is shown in FIGURE 3, has a load-elongation curve 41 which is essentially identical to a load-elongation curve 42 of a similar metal cord, not comprising a weld. The elongation at rupture of the strand-welded cord (curve 41) is 69% of the elongation at rupture of a not-welded metal cord, whereas the force at rupture of the strand-welded metal cord is even 90% of the not-welded metal cord.

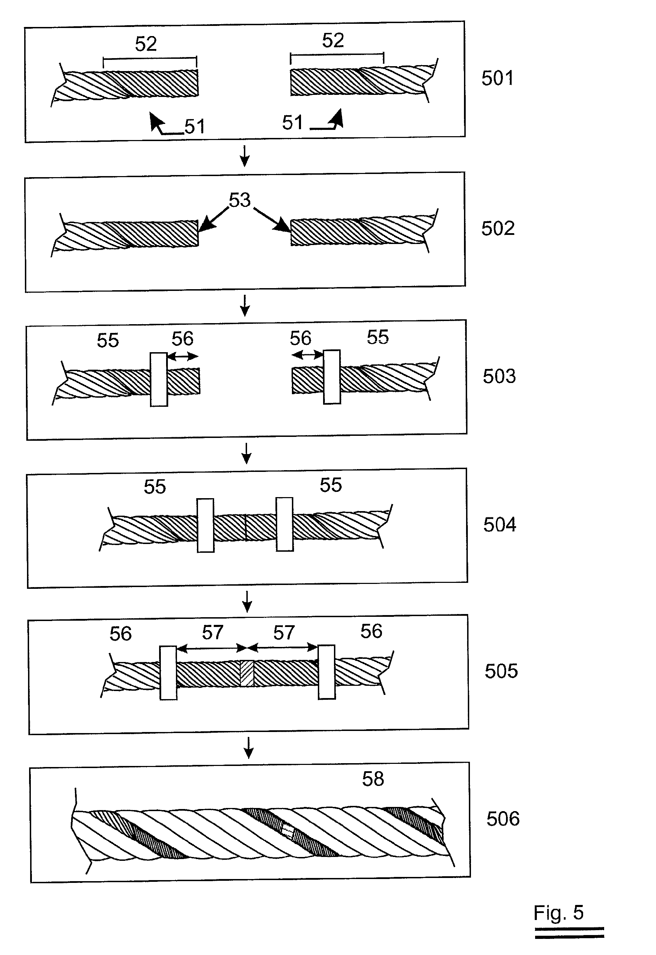

A method to provide a metal cord as subject of the invention is schematically shown in FIGURE 5. E.g. a strand may break or the spool, providing such strand may run empty. Or a filament used to provide a strand may break during production of the strand. In such cases, according to the invention, two ends of a strand are connected to each other.

In step 501, both ends 51 are given a significantly lower lay length, e.g. lay length of 5mm in stead of the original 8mm., over a length 52, e.g. being 60mm.

In step 502, at the outer surface of ends 51, the ends are given an essentially flat outer cross-section 54.

Two welding electrodes 55 are fixed one to each end 51 at a distance 56 to the cross-section 53, smaller than the length 52 (step 503).

During the welding step 504, both ends 51 are brought in connection to each other at the cross-sections 53, using a preset pressure. The electrodes 55 provide a specified current through the strand for a preset time, which causes welding of the strand.

The weld is than annealed during annealing step 505. Two annealing electrodes 56 are fixed to the strand, one at each side of the weld. The distance 57 between the annealing electrode and the middle of the weld is preferably smaller than the length 52. Possibly, but not necessarily, the welding electrodes may be used as annealing electrodes. During a preset time, a preset current is flowing through the weld.

The welded strand is than further used in cabling or bunching operation 506 in order to provide a metal cord 58 as subject of the invention.

Such metal cord as subject of the invention can be used to provide a belt, comprising several metal cords as subject of the invention and a polymer matrix, e.g. polyurethane.

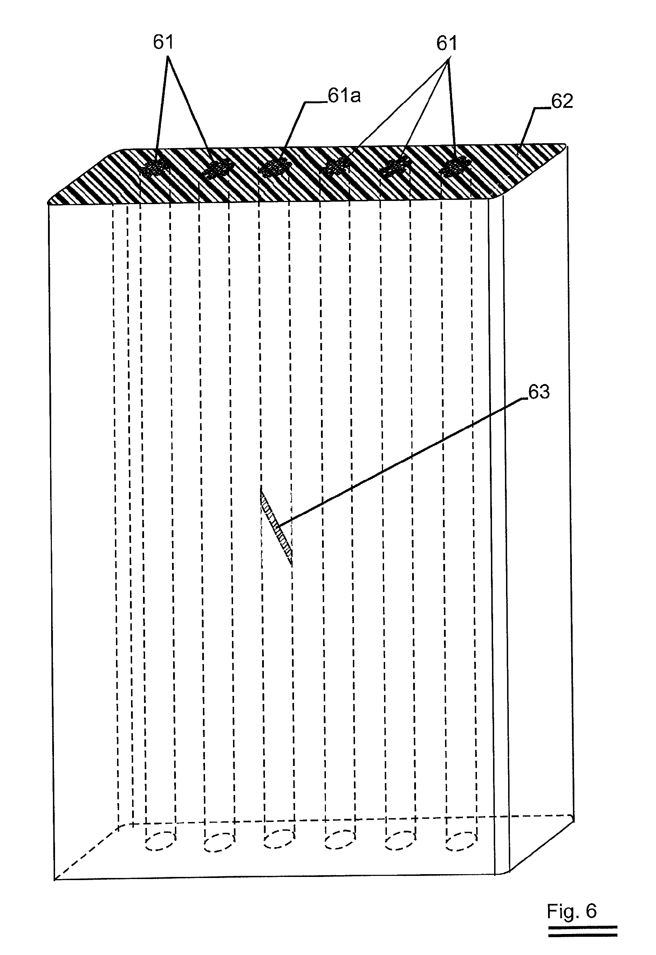

As shown in FIGURE 6, metal cords 61 as subjects of the invention are embedded in a polyurethane matrix 62. The metal cord 61a has a weld 63 in one of its strands, used to provide the cord 61a. Such belt can be used as elevator belt.

## Claims

1. A metal cord comprising at least two metal strands, **characterized in that** at least one of said metal strands being welded, the other of said metal strands are not being welded near said strand weld.

2. A metal cord as in claim 1, said metal cord having a welding part with a welded part length, the other of said strands are not being welded in said welded part.

3. A metal cord as in claim 1 to 2, said metal cord having a cord diameter being less than 14mm.

4. A metal cord as in claim 3, said metal cord having a cord diameter being less than 2.5mm

5. A metal cord as in claim 1 to 4, said metal strands having a strand diameter being less than 5mm.

6. A metal cord as in claim 5, said metal strands having a strand diameter being less than 0.9mm.

7. A metal cord as in claim 1 to 6, said metal strands comprising metal filaments, said filaments having a diameter smaller than 1.15mm.

8. A metal cord as in claim 7, said metal strands comprising metal filaments, said filaments having a diameter smaller than 0.25mm.

9. A metal cord as in claim 1 to 8, said diameter of said weld of said strand is essentially equal to said strand diameter of said welded strand.

10. A metal cord as in claim 1 to 9, said welded part length being less than 10 times the lay length of said metal cord.

11. A metal cord as in claim 1 to 10, said strand with weld having an elongation at rupture of more than 30% of the elongation at rupture of an identical strand without weld.

12. A metal cord as in claim 1 to 11, said metal cord being a steel cord.

13. A metal cord as in claim 1 to 12, wherein a sample of said metal cord comprising a weld, having a force at rupture of more than 50% of the force at rupture of a sample of said metal cord, not comprising a weld.

14. A metal cord as in claim 1 to 13, wherein a sample of said metal cord comprising a weld, having an elongation at rupture of more than 80% of the elongation at rupture of a sample of said metal cord, not comprising a weld.

15. Use of a metal cord as in one of the proceeding claims for reinforcing polymer or rubber belts.

16. Use of a metal cord as in one of the proceeding claims in elevator or hoisting belts.

17. Use of a metal cord as in one of the proceeding claims in timing belts.
